# EUROPEAN PATENT APPLICATION

(11) **EP 4 727 075 A1**
(43) Date of publication of application: **15.04.2026**
(21) Application number: 24383091.6
(22) Date of filing: 08.10.2024
(51) Int. Cl.: H04L 41/042, H04L 41/0668, H04L 45/02, H04L 41/12, H04L 41/0893, H04L 41/0816, H04L 41/34, H04L 41/084

(54) **NOVEL MASSIVELY DECENTRALIZED NETWORK AUTOMATION FRAMEWORK, AND CORRESPONDING METHOD OF OPERATION**

(71) Applicant: CENTRE TECNOLOGIC DE TELECOMUNICACIONS DE CATALUNYA (CTTC), 08860 Castelldefels (ES)
(72) Inventor: GIFRE, Lluis, 08860 Castelldefels (ES); VILALTA, Ricard, 08860 Castelldefels (ES); MUÑOZ, Raul, 08860 Castelldefels (ES)
(74) Representative: Mohammadian, Dario

(57) **Abstract**

Different aspects of the invention provide a modular network component, which enables a highly scalable solution for optimum control and management of a network comprising multiple nodes. All network components together form a control and management plane which can intervene in determining what to do or how to resolve an incoming request, or up-scale or down-scale to efficiently handle the number of nodes being managed or maintaining communication with disconnected sub-groups of nodes, thereby minimizing the detrimental effects of network breakdowns, rendering a truly scalable as well as disaster tolerant network control and management network and corresponding method.

## Description

### TECHNICAL FIELD

The present invention relates generally to the field of communication technologies, and in particular, to a novel massively decentralized network automation framework, together with a corresponding method.

### BACKGROUND OF THE INVENTION

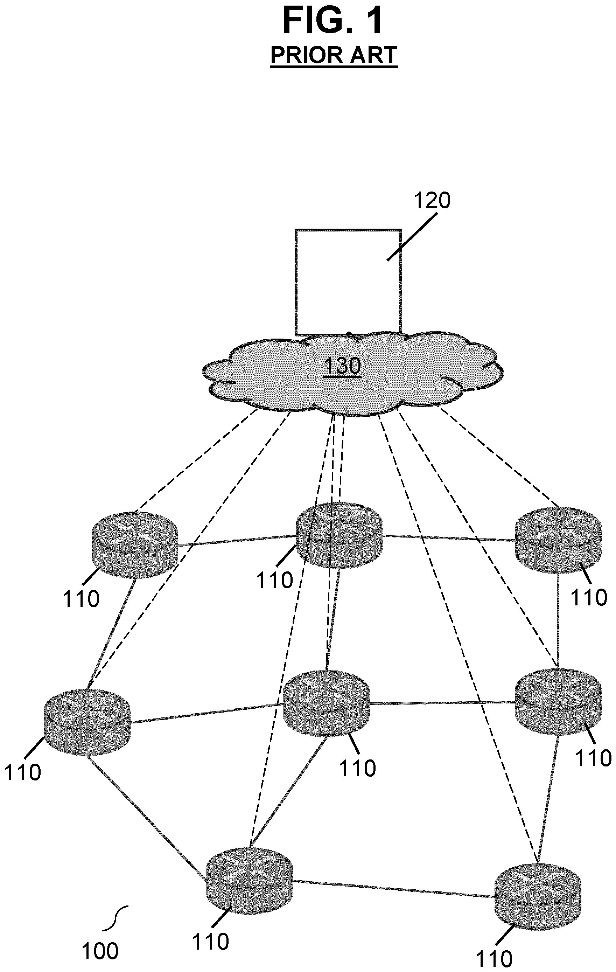

The 5G/6G and beyond infrastructures demand timely management, monitoring and reconfiguration of complex, large, and heterogeneous equipment in an integrated manner. This becomes particularly important when dealing with time-sensitive networking and mission-critical applications and services. **FIG. 1** depicts a conventional Network Infrastructure Control and Management C&M system 100, such as those based on Network Function Virtualization, NFV, or Software-Defined Networking, SDN. Centralized system 100 comprises a total number N of nodes 110, and a single network orchestrator 120 executing the C&M functions through the control and management plane network 130, typically supported by classical electrical networks and/or in-band/out-of-band networks, such as Optical Supervisory Channels. Following the nomenclature *controllers-to-nodes,* this topology is known as 1-to-N infrastructure, as 1 controller is managing a total of N nodes. However this type of centralized system cannot provide the timely management, monitoring and reconfiguration of complex, large, and heterogeneous equipment in an integrated manner as required. Fulfilling these requirements poses some significant challenges and the centralized architectures cannot handle these new requirements.

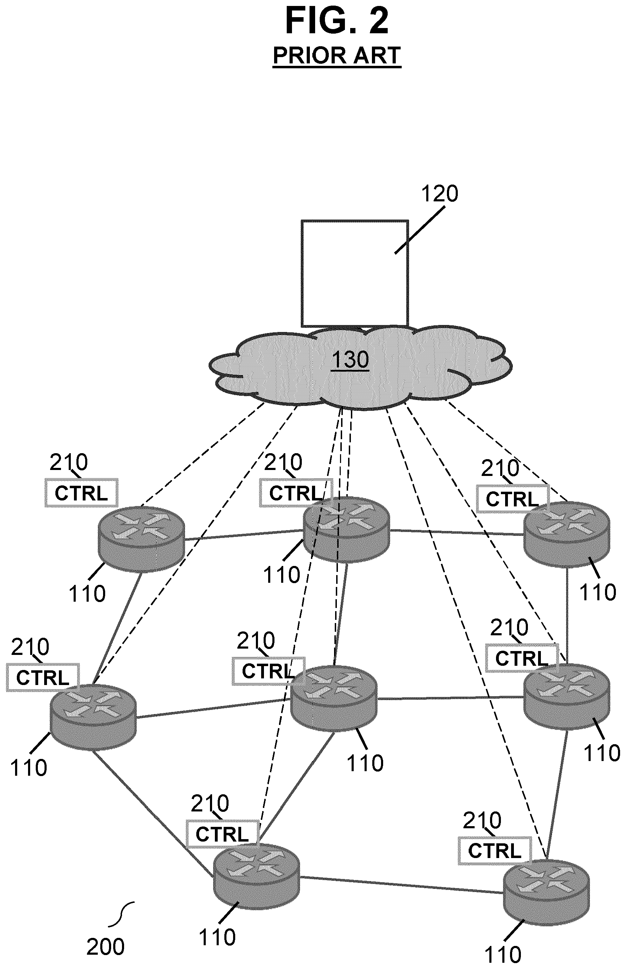

In response, decentralized solutions have been proposed. **FIG. 2** depicts a conventional decentralized Network Infrastructure Control and Management C&M system 200. Instead of having only a single centralized controller 120, decentralized system 200 comprises additionally a local controller 210 executing locally at each one of the N nodes 110. The network orchestrator 120 executes higher-level functions through the control and management plane network 130, typically supported by classical electrical networks and/or inband/out-of-band networks, such as Optical Supervisory Channels. This topology is known as N-to-N infrastructure, as there is 1 local controller per node, and every one of the total N nodes is locally managed by its respective controller (in this case, the total number of controllers M is equal to the total number of nodes N, that is, M=N). Nevertheless, this decentralized architecture is also not satisfactory, as typically, each node makes its own decisions based on rules and can, at most, only request resource reservations. Although it is an improvement over the fully centralized alternative, this architecture still has limitations in terms of the requirements of timely management, monitoring and reconfiguration of complex, large, and heterogeneous equipment in an integrated manner. In particular, the scalability of such systems is limited, especially in networks with a high number of nodes and links.

Furthermore, there exists an additional problem which occurs more frequently the more complex and convoluted communication networks become, such as the described centralized or decentralized architectures. Given that networking, storage, and computation resources might suffer outages, in the event of a disaster causing network partitions, the network becomes multiple disconnected sets of nodes not reachable between them. Even though the network infrastructure within a node might still be operational, and the infrastructure nodes might be able to convey traffic, they might become uncontrollable network infrastructure partitions, or in other words, unmanageable, even causing complete blackouts just because of the unreachability of the C&M system. Since otherwise valid and operational network resources become unmanageable, this brings about a waste of valuable operational resources, resulting in a C&M system that is not disaster tolerant.

Therefore, a need exists to effectively solve the abovementioned problems.

### SUMMARY

It is therefore an object of the present invention to provide solutions to the above-mentioned problems as defined in the claims.

It is desirable to provide a truly scalable decentralized network automation framework comprising any number of locally executing network components, wherein a single network component is configured to manage more than one network node. In this manner, multiple geo-distributed network components are capable of running a portion of the complete architecture, enabling extreme flexibility in the management of a multi-node network allowing for efficient scalability, both up-scaling as well as down-scaling. Since the network is decentralized, a maximum number of processes are parallelized. The main advantage is a significant reduction in latency till connection establishment. Another advantage is a global computation time reduction due to the parallelization of otherwise processes executed serially. This in turn allows for timely management, monitoring and reconfiguration of complex, large, and heterogeneous equipment in an integrated manner, particularly when dealing with time-sensitive networking and mission-critical applications and services.

Therefore, it is an object of the invention to provide a network component enabling flexible control and management and scalability of the network.

It is another object of the present invention to provide a network comprising multiple network components enabling flexible control and management and scalability.

It is another object of the present invention to provide a method in a network component enabling flexible control and management and scalability of the network.

It is another object of the present invention to provide a method in a network comprising multiple network components enabling flexible control and management and scalability.

It is another object of the present invention to provide a computer program comprising instructions, once executed on a processor, for performing the steps of a method in a network component or in a network comprising multiple network components.

It is another object of the present invention to provide a computer readable-medium comprising instructions, once executed on a processor, for performing the steps of a method in a network component or in a network comprising multiple network components.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular, the invention provides methods, apparatus, systems, processors, program codes, computer readable media, and other apparatuses and elements that implement various aspects, configurations and features of the invention, as described below.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIG. 1** depicts a conventional fully centralized Network Infrastructure Control and Management C&M system.
**FIG. 2** depicts a conventional fully decentralized Network Infrastructure Control and Management C&M system.
**FIG. 3** depicts an example network for Infrastructure Control and Management C&M according to one aspect of the invention.
**FIG. 4** depicts a network component according to one embodiment of the invention.
**FIG. 5** depicts a method of network control and management performed iteratively by a network component of the invention according to another embodiment of the invention.
**FIG. 6** depicts a disaster tolerant method of network control and management performed iteratively by the NAF components of the invention.
**FIG. 7** depicts an example network for Infrastructure Control and Management C&M hit by a disaster.
**FIG. 8** depicts another example network for Infrastructure Control and Management C&M hit by a disaster.

### DETAILED DESCRIPTION OF THE INVENTION

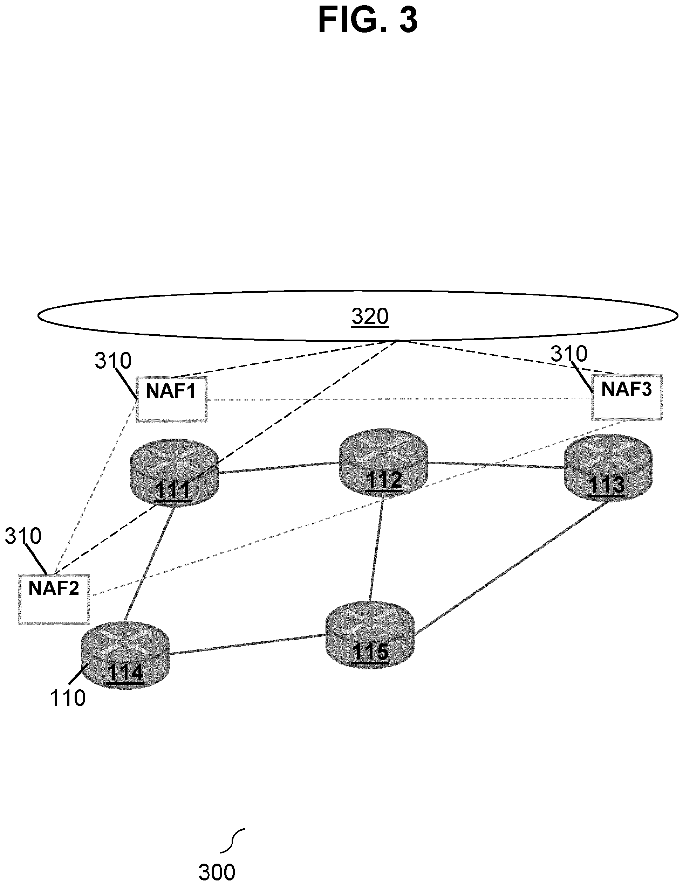

**FIG. 3** depicts an example network 300 for Infrastructure Control and Management C&M, comprising a plurality of N = 5 nodes 110 (111, 112, 113, 114, 115). Network 300 additionally comprises a plurality of M = 3 network automation framework NAF components 310 (NAF1, NAF2, NAF3) of the invention, and a communications plane 320 configured to enable direct communication between the NAF components, which might be supported, for instance, by classical electrical networks and/or in-band/out-of-band networks, such as Optical Supervisory Channels. In this example, M = 3 and N = 5, however, any other combination of M NAF components and N network nodes is also possible, as long as it is configured following the topological model of the invention known as *m*-to-1 infrastructure, as every node is configured to being controlled, or managed, by *m* NAF components, where *m* > 1. Conversely, 1 NAF component is configured to control, or manage, *n* multiple nodes (where 1 < *n <* N) and it is locally implemented in a network node.

The number *m* of components assigned to control *n* nodes is dynamically determined iteratively as the factors fluctuate with time and/or operation. The particular ratio of *m* to *n* network partitions, and therefore total M to N, depends on the particular implementation scenario and is determined as a function of a combination of factors, such as geographic, administrative, topologic, equipment vendors, number of nodes, expected quality of service, resiliency, history of operation and faults. In particular, code execution capabilities of the nodes can be shared between nodes. If a particular node does not have the capacity to run a NAF component, it cannot be deployed there and will have to be handled by a NAF running in another location, typically nearby to minimise latency. Hence, every node must be served by a number *m* of NAF components which together provide the required code execution capabilities for that node running a particular service. The communications plane 320 is additionally configured for external communication, for example, with a network orchestrator, in case necessary. However, no network orchestration is necessary for executing complete C&M functions, as the control and management plane formed by the NAF components comprises all the necessary elements. Each NAF component comprises the basic elements necessary to keep the equipment up and running, to enable interoperation with neighbour NAF components, and to distribute and run procedures for scalability purposes. Hence, the plurality of NAF components communicate with each other and exchange data enabling network and resource partitioning to be able to up-scale or down-scale and the need may be at a particular moment in time.

In an initial configuration, a number of pre-established nodes may already comprise installed NAF components, however, during operation, further NAF components can be instantiated in new nodes in order to provide service continuity, new services, or expand the geographic availability of offered services. Likewise, once the services have been offered, NAF components can be removed from nodes, and their instantiation eliminated from particular nodes, thereby down-scaling. Due to the iterative operation of the NAF components, which are in constant communication and data exchange with each other, the number and location of nodes with NAF components in execution is known at any one time, enabling optimum service provision, up-scaling and down-scaling.

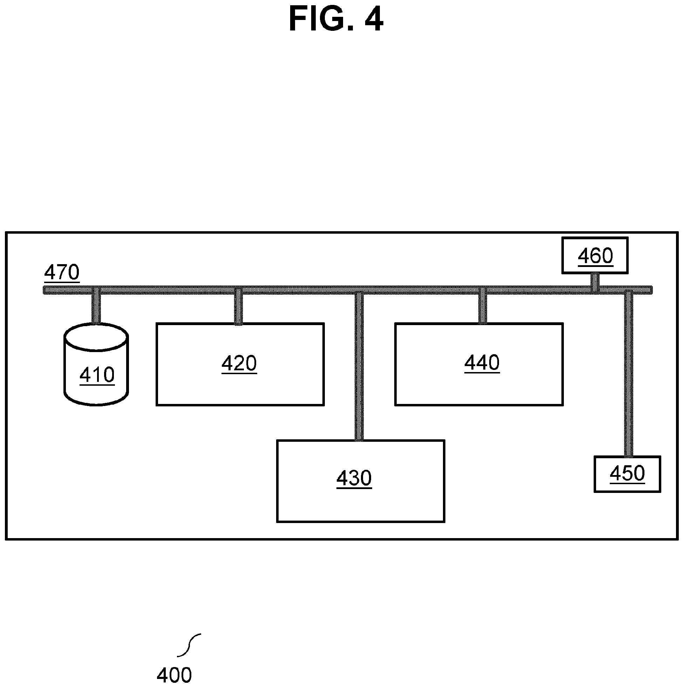

**FIG. 4** is a block diagram with the main modules of a network component 400 according to one embodiment of the invention. In the context of this invention, the network component of the invention is also known as network automation framework component, or NAF component in short. Each network component 400 comprises a Database Module 410, a Service Module 420, a Path Computation Module 430, a South Bound Interface SBI Module 450, a Synchronization Module 440, and a data bus 470 for internal communications between the modules, and external communications. Optionally, network component 400 may also comprise a North Bound Interface NBI Module 460.

The Database Module 410, or memory means, is essentially a memory module which is configured to maintain a copy of all the data elements that the NAF component needs to operate. The data elements may include one or more of the list of devices connected locally (directly to this NAF component) or devices managed by the local NAF component due to non-availability of a NAF component on their location, their current (and in process of (de)configuration) monitoring details and rules, services that their path passes through one of the devices managed by the local NAF component and therefore are relevant to the local NAF component in case it has to manage them, telemetry and resource usage data of the locally managed network devices, links connecting these locally managed devices to each other and to devices of neighboring NAF components, the neighboring NAF components themselves along with their status and the data stored by such neighboring NAF components to the local one. It also stores data in terms of tunneled NAF links (the links that interconnect NAF components with each other, especially those that pass through non-NAF capable devices). Hence each NAF component is configured to keep a replica of the locally-supported services and related resources, each data record is replicated in relevant locations along the network, for instance, the nodes involved in the service. The skilled artisan knows that for this type of scenarios the modules implemented are typically relational, scalable, replication-capable and highly available memory modules.

In terms of scalability, each NAF component needs to track only a partial view of the global network infrastructure information related to the local node, the directly-connected equipment in neighbour network nodes (for redundancy purposes), and possibly, remote locations that are not NAF capable. The information items to be tracked includes, but is not limited to, the equipment inventory, the configuration rules, the status of the components, the details on the connectivity, compute, and storage resources.

The Service Module 420, or means of servicing, is responsible for operating the modules within a single NAF component, and is configured for:
(i) managing the connectivity services, for example, based on the type of service requested; for example, a connectivity request for connecting nodes 111 and 115 in FIG.3, however constrained with specific requirements, such as minimum required bandwidth and maximum acceptable latency;
(ii) requesting from the path computation module the corresponding path for the new service, which is computed by executing one algorithm or another;
(iii) managing the connection requests to the SBI module which configures the corresponding nodes according to the computed path and the requested configurations; and
(iv) storing and retrieving from the database module the relevant information for these connectivity services that the service module manages.
This service module supports plugins called service handlers that allow defining specific behaviors for certain types of services so that the component is flexible and adaptable to be able to deal with new types of services that appear in the future. An example of service manager plugin is Layer 2 Network Manager for IETF Layer 2 VPN.

The Path Computation Module 430, or means of path computation, essentially comprises a set of routing algorithms that are used by the service module when it needs to establish a connectivity service or update an already established one, either in order to optimize the use of resources throughout the network or because of a failure in some network element. These algorithms are in plugin form and the algorithm pool can be extended with new ones, if necessary, to provide new types of route calculation, for example, when adding new types of services or new constraints to be taken into account in the route calculation. An example of path computation algorithm can be constrained shortest path.

The South Bound Interface SBI Module 450, or south bound interface means, is in charge of operating with the devices that make up the transport network. It has mechanisms to connect to them, authenticate, discover their capabilities and resources, configure and deconfigure them, and also monitor them. Since operating these devices is highly dependent on what protocols and data models they support, the SBI module implements support for plugins called drivers so that it can be extended to support new devices, protocols and data models. A particular example for SBI plugin is a driver based on OpenConfig data models using either NetConf or gNMI management protocols. Apart from managing device control and monitoring interactions, it is also responsible for storing in, and retrieving from, the database module the relevant node information to configure, monitor, and ensure that these are in accordance with that specified by the users and/or other NAF modules, such as the service module.

The North Bound Interface NBI Module 460, or north bound interface means, is in charge of optionally operating with a network orchestrator, if the particular implementation has one. The NBI module implements support for plugins called connectors so that it can be extended to support new service type requests, interfaces and data models exposed by the network orchestrators. A particular example of NBI connector is the IETF L3VPN Service Delivery data model using a NetConf or RESTConf or gNMI interface.

The Synchronization Module 440, or means of synchronization, is configured to coordinate the modules of the NAF component and the coordination with other NAF components for the mentioned optimum service provision, up-scaling and down-scaling. Since all NAF components are connected to the communications plane 320, which in one aspect can be a replicated data bus, they are in constant communication with each other.

Some of the main functions of the synchronization module are a) to monitor the most efficient communication channels between NAF components of a same node, b) to timely exchange the partial replicas of information, c) to detect under-replicated data blocks and ensure they are replicated on appropriate and relevant different locations (when possible), d) to negotiate NAF components operations across nodes, such as path computations, requesting partial computations and combining retrieved results, e) to deal with self-reconciliation and re-optimization activities between NAF components in the event of a disaster recovery, a new link installation, and similar (for instance, redirecting traffic through a recently installed or recovered traffic engineering link or an entire new network location). Some other functions comprise NAF component presence detection, per node reachability metric determination or collection and table generation, local domain table generation, primary NAF component assignment, NAF component unavailability determination due to disaster, or primary NAF reassignment due to disaster. Therefore the synchronization module provides all the control, management and synchronization functions necessary for its particular NAF component to be able to autonomously coordinate network automation functions with other NAF components without any central entity, enabling subsets of nodes to coordinate communications between each other.

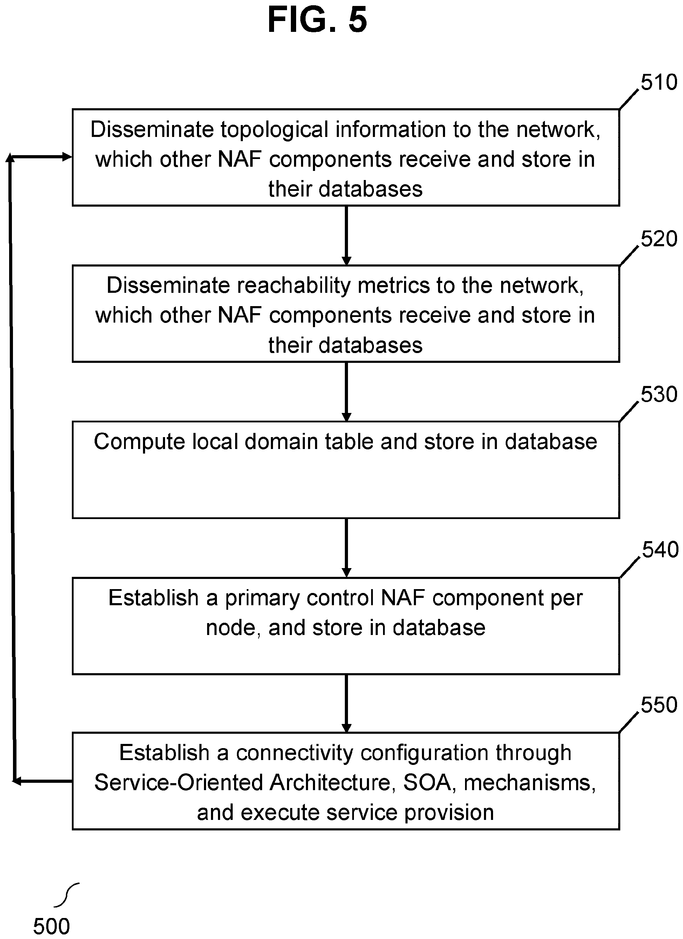

**FIG. 5** depicts a method 500 of network control and management performed iteratively by a NAF component of the invention according to another embodiment of the invention. Via the coordination of the various NAF modules, in particular the synchronization module, each NAF component is configured to, in a first step, disseminate 510 topological information to the network, which other NAF components receive and store in their databases. In a second step, each NAF component is configured to disseminate 520 its reachability metrics to the network, which other NAF components receive and store in their databases. In a third step, each NAF component is configured to compute 530 its local domain table and store in its database. In a fourth step, each NAF component is configured to establish 540 a primary control NAF component per node, and store it in its database. In a fifth step, each NAF component is configured to establish 550 a connectivity configuration through Service-Oriented Architecture, SOA, mechanisms, and consequently execute service provision. The following paragraphs will detail further each one of these steps.

In step 510, topological information is broadcast, or disseminated, to the network which other NAF components receive and store in their databases. Topological discovery and broadcast mechanisms are well known in the art, and the skilled artisan would choose one from the available alternatives to implement this step.

In step 520, the NAF component's reachability metrics are computed and broadcasted, or disseminated, to the network, which other NAF components receive and store in their databases. These metrics might be representative of a quality of service parameter which can be used, for instance, for optimum route calculation and service provision. Hence, typically, the metrics can be at least one of, or a combination, of latency, throughput, bandwidth, delay, or other metric types, such as administrative metrics or cost metrics. They can also be definable as the system is being designed and implemented in a particular scenario or for a particular use case. These actions are performed by the synchronization module.

**TABLE I** depicts the storage of this information in the form of a reachability table.

**TABLE I - Reachability Table per NAF Component**

| | **NAFs and corresponding metrics** | | | | | |
|---|---|---|---|---|---|---|
| | **NAF1** | **Metric** | **NAF2** | **Metric** | **NAF3** | **Metric** |
| **Network Component** | 111 | 20 | 111 | --- | 111 | --- |
| | 112 | 30 | 112 | --- | 112 | --- |
| | 113 | 10 | 113 | 100 | 113 | --- |
| | 114 | 100 | 114 | 10 | 114 | 200 |
| | 115 | --- | 115 | 100 | 115 | 25 |

The same information can be represented in data model format:

```
         NAF_info {
             NAF_ID: 1
             nodes:
             [
                 {NODE ID: 111, Reach_metric: 20},
                 {NODE ID: 112, Reach_metric: 30},
                 {NODE-ID: 113, Reach_metric: 10},
                 {NODE_ID: 114, Reach_metric: 100},
             ] }
```

After the broadcasting of this information is complete, each NAF component can populate its database with such a reachability table. In step 530, each NAF component determines its local domain table and store it in its database. Subsequently, in step 540, a primary control NAF component is established per node, and stored in its database. The primary NAF component is established as the NAF component of the plurality of NAF components with optimum metrics. The optimum metrics are established or selected, following the example metrics described previously, as the metrics which minimize latency, or maximise throughput, or minimize bandwidth usage, or minimize delay, or minimize costs, or otherwise optimize administrative metrics. This step is done by synchronization module. The optimum metrics can also involve a combination of the above, such as, the selecting the NAF component as the primary NAF component because it provides the lowest latency, despite the fact that it might not have the lowest costs.

As an example, as can be seen together with the example implementation of FIG. 3, network component NAF1 has the best degree of reachability to node 111 and the worse to node 114, whereas it cannot even reach or communicate with node 115. Likewise, network component NAF2 has the best degree of reachability to node 114, whereas it cannot even reach or communicate with nodes 111 or 112. Likewise, network component NAF3 has the best degree of reachability to node 115 and the worse to node 114, whereas it cannot even reach or communicate with nodes 111, 112 or 113. In this example the lower metric value is considered optimum, but this does not deprecate that higher metric value might be considered as optimum for other example scenarios.

**TABLE II** depicts the storage of this information in the form of a local domain table.

**TABLE II - Local Domain Table per Node**

| **Node** | **Prioritized NAF Order** |
|---|---|
| 111 | NAF1 |
| 112 | NAF1 |
| 113 | NAF1, NAF2 |
| 114 | NAF2, NAF1, NAF3 |
| 115 | NAF3, NAF2 |

Hence the local domain table orders, for each node, the NAF components configured and capable to manage the node. The ordering is performed following the priority as given by the reachability metrics of TABLE I. As can be seen together with the example implementation of FIG. 3, node 111 has NAF1 as its primary NAF component. Likewise, node 112 has NAF1 as its primary NAF component. Node 113 has NAF2 as its primary NAF component, however if this network component fails, the next one in priority, that is, NAF1, is re-assigned as the primary NAF component. NAF3 is also configured and capable to manage node 113 in case NAF1 fails. Likewise, Node 115 has NAF3 as its primary NAF component, however if this NAF component fails, the next one in priority, that is, NAF2, is re-assigned as the primary NAF component.

The same information can be represented in data model format:

```
         NAF-LOCAL NODE DOMAIN TABLE:
             [
            {
                 NODE_ID: 111,
                 Domains: [NAF1]
            }, {
                 NODE_ID: 112,
                 Domains: [NAF1]
            {
                 NODE_ID: 113,
                 Domains: [NAF1, NAF2]
            }, {
                 NODE_ID: 114,
                 Domains: [NAF2, NAF1, NAF3]
            }, {
                 NODE_ID: 115,
                 Domains: [NAF3, NAF2]
             }
         ]
 
```

In step 550, a connectivity configuration is established through Service-Oriented Architecture, SOA, mechanisms, and consequently the service provision is executed. The service provision will be initially managed for each node by the primary NAF component as indicated in TABLE II. The connectivity configuration comprises firstly computing the path between origin node and destination node, which might be the shortest path but not exclusively, being a series of connections between nodes. Subsequently, using the local domain table, the primary NAF components managing each node in the path are identified and finally, it is by means of these primary NAF components, and the communication between them, that the service provision is managed. The source node primary NAF component is typically responsible for triggering the starting of the process, and communicates subsequently to the following primary NAF components, established by the nodes included in the path. The protocol of this method is repeated iteratively, enabling all nodes and NAF components to be updated with latest information representing the current state of the network. This step is done by synchronization module.

**TABLE III** depicts the final result of this process of service provision by optimum NAF components.

**TABLE III - Optimum NAF Component Management**

| **Origin Node** | **Destination Node** | **Path Nodes** | **Optimum NAFs** |
|---|---|---|---|
| 111 | 115 | 111 to 112 to 115 | NAF1 and NAF3 |

As can be seen together with the example implementation of FIG. 3, for a service provision for an origin node 111 to a destination node 115, the path computation module determines that the path is from origin node 111 to intermediary node 112 ending at destination node 115 (in this example scenario, the shortest path is being computed). Using TABLE II, NAF1 is identified as the primary NAF component for nodes 111 and 112, whereas NAF3 is identified as the primary NAF component for node 115. Hence, NAF1 and NAF3 communicate with each other and coordinate the optimum service provision in a decentralized, flexible and scalable manner.

Therefore, the method of network control and management described enables the synchronization of otherwise completely independent and disconnect network components. These locally executing network components are instantiated whenever necessary, and each comprises the modules necessary for communicating with each other and exchanging the necessary information in order to be able to synchronize information with each other. This results in each one of them being capable of executing their role in the complex protocol of optimum path computation and subsequent service provision. In this manner, optimum service, up-scaling and down-scaling is provided for timely management, monitoring and reconfiguration of complex, large, and heterogeneous equipment in an integrated manner, particularly when dealing with time-sensitive networking and mission-critical applications and services, especially in networks with a high number of nodes and links.

The skilled artisan understands that the proposed device configuration of the NAF component, and corresponding method, is generic enough and adaptable to perform other operations, such as service teardown, distributed monitoring data collection, network data analysis, and dynamic service adaptation and optimization operations.

### Disaster Tolerance

In an advantageous aspect of the invention, due to the described characteristics of the NAF component, and the control and management plane they all form when in communication with each other, the NAF component enables a truly disaster tolerant control and management network, together with corresponding disaster tolerant method of control and management of a network.

On one hand the NAF component can be operated independently, however, on the other hand, it can also be operated in a clustered manner, together with a plurality of other NAF components distributed across a network, or portion of the network. All NAF components form a control and management plane and can intervene, if necessary, in determining what to do or how to resolve an incoming request, maintaining communication with disconnected sub-groups of nodes, thereby minimizing the detrimental effects of transport network breakdowns, thus enabling isolated equipment to operate normally even in the event of a disaster.

During a disaster, it is possible to completely lose communication channels between network nodes, or otherwise connectivity between nodes and higher level network components. Complete loss of a service happens when all the network nodes involved in that service are impacted by the disaster.

In the event of a disaster creating multiple infrastructure partitions, the NAF components still in operation and present within a still connected partition can self-coordinate between each other to continue serving new requests after the partition happens. Even if every network infrastructure link is disconnected, the NAF component of each node can continue managing the co-localized nodes and serve new regionally-scoped requests. As discussed in the previous section, it is not compulsory for a disaster to occur, or for there to be communications loss, for the NAF components to coordinate with each other dynamically and flexibly, since they already do it during regular operation.

Thus, the NAF component enabled network is disaster-tolerant given it continues succeeding in its mission of controlling the operational network equipment, this resiliency providing a key technology for mission critical applications where single points of failure causing blackouts needs to be mitigated. The additional advantage of re-utilizing still valid operational resources, and not allowing them to be wasted as in the prior art systems, is another significant advantage which should not be under appreciated.

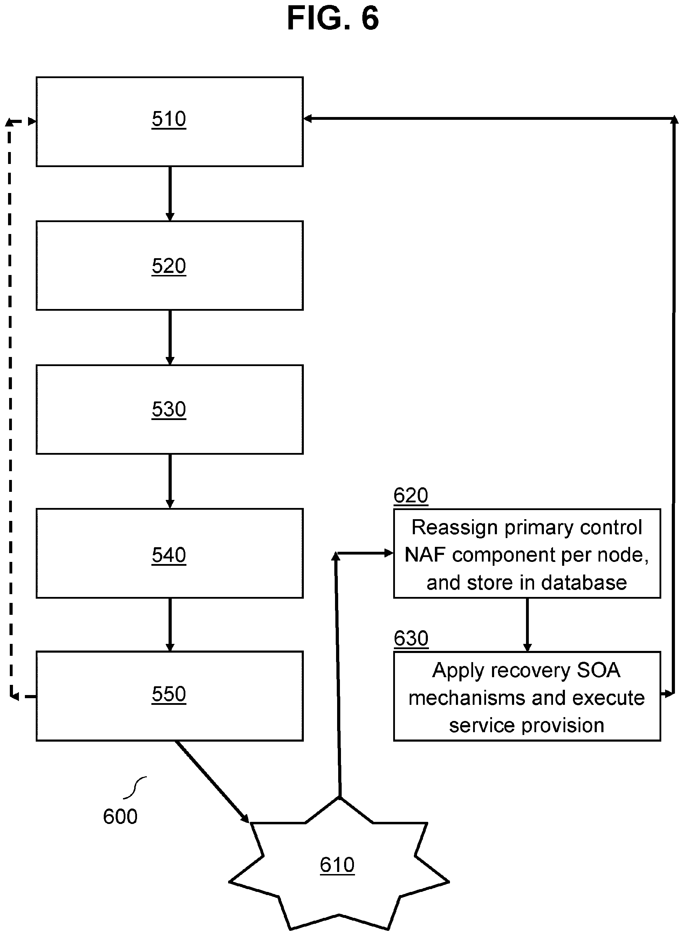

**FIG. 6** depicts a disaster tolerant method 600 of network control and management performed iteratively by the NAF components of the invention according to one aspect of the invention. As described, under regular operation, the NAF component in every node perform the protocol or algorithm of the embodiment of FIG. 5. However, if at any point during its operation a disaster 610 happens, and the network is partitioned into k disconnected partitions, the additional steps of FIG. 6 are implemented to provide for resiliency and disaster tolerance.

Via the coordination of the various modules of the NAF components, in particular the synchronization module, each NAF component present in every node is configured to determine that the primary NAF component for that node is non-operational and re-assign 620 the next NAF component in its local domain table (TABLE II) as the new primary NAF component. If this NAF component is also non-operational, due to it being determined that it is not available, or does not answer communications, then the next NAF component in priority is selected, and so on.

After an iteration cycle, where all nodes have performed this reassignment, in step 630, normal service provision is executed, or if not possible due to non-availability of the data plane, recovery SOA mechanisms are applied to re-build the control plane, and be able to provide regular service provision once more. At this point, the protocol returns to the regular operation of FIG. 5, however this time the regular protocol is applied within self-contained and self-operating partitions, since the original primary counterparts are not reachable due to the disaster.

Hence, an enhanced network is enabled by the plurality of NAF components acting as a control plane to automatically deal with a disaster and reconfigure itself to continue providing services wherever possible, even through disconnected partitions throughout the network. The same protocol of FIG. 6 will detect, once previously-failed nodes are operational once more, the primary NAF components re-instated again, and optimal operation provided once the disaster has been resolved and broken elements re-built. Usually nodes will be recovered progressively and at each step optimizations are performed. The final stage is achieved when all nodes are once more operational. In this sense, the disaster tolerance is highly efficient as it automatically operates without prior knowledge of the topology it is operating within. Without any disaster, the topology represents the whole breadth of the network. With disaster, the topology for each NAF component represents only the nodes of the partition that can maintain connectivity between themselves. Hence, multiple partitions are self-managed and can continue providing connectivity to their respective users. Once the disaster is resolved, the C&M coverage is expanded again to cover more or all nodes.

A skilled artisan would understand the same methods and procedures and protocols enable to deploy new network equipment in new network locations and progressively and dynamically expand both the transport network and the network for Infrastructure Control and Management C&M, while automatically distributing and load balancing the responsibilities of the NAF components for the new network equipment and locations. Hence, a truly scalable architecture is provided.

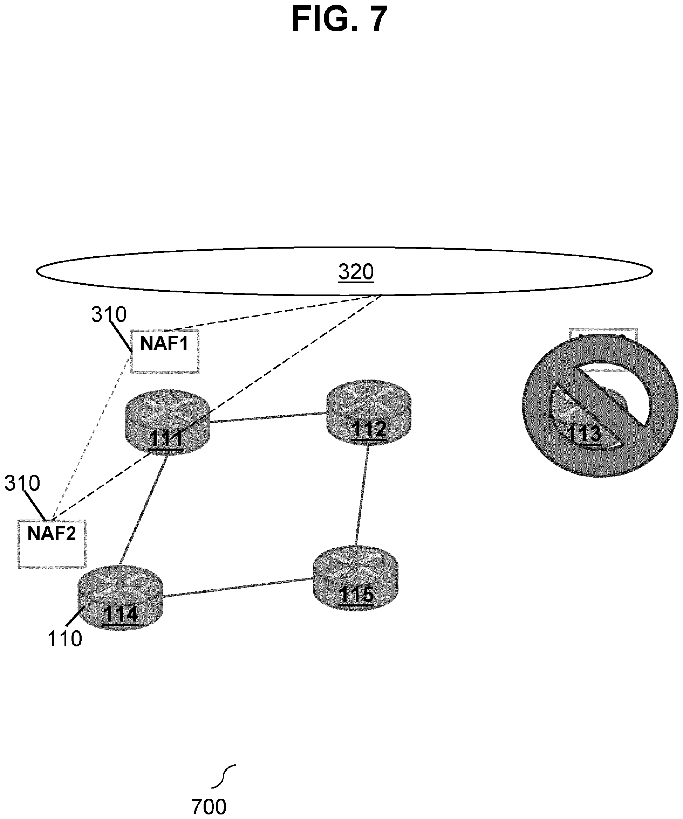

**FIG. 7** depicts an example network 700 for Infrastructure Control and Management C&M hit by a disaster, rendering node 113 non-operational. **TABLE IV** depicts the final result of the disaster recovery process by the remaining NAF components.

**TABLE IV - Disaster Recovery by NAF Component Management**

| **Origin Node** | **Destination Node** | **Shortest Path Nodes** | **Optimum NAFs** |
|---|---|---|---|
| 111 | 115 | 111 to 112 to 115 | NAF1 and NAF2 |

As can be seen together with the example implementation of FIG. 7, for a service provision for an origin node 111 to a destination node 115, the path computation module determines that the path is from origin node 111 to intermediary node 112 ending at destination node 115 (following from the previous example scenario, the shortest path is being computed). Using local domain TABLE II, NAF1 is identified as the primary NAF component for nodes 111 and 112. Since NAF3 is identified as non-operational, the next NAF component in priority, in this case NAF2, is established as the new primary NAF component, and NAF1 and NAF2 coordinate with each other in disaster recovery, providing resiliency and coordinating to allow service provision for that portion of the network formed by nodes 111, 112, 114, and 115.

Another disaster tolerance measure is to provide diversity in communication between nodes and their NAF components. Hence, in one aspect, the synchronization module of each NAF component is configured to communicate with the synchronization modules of every other NAF component by means of the communications channel 320 to reach remote instances avoiding traversing all the intermediate network nodes and as a backup in case of a network link failure. In another aspect, the synchronization module of each NAF component is configured to communicate with the synchronization modules of every other neighbor NAF component by means of an out-of-band channel to establish direct links in order to explicitly monitor the availability of connectivity with and the health of its neighbour NAF components, and to achieve a minimal latency for the control and management plane data exchange. The secondary out-of-band channel provides diversity to the primary communications channel 320, assuring communication will always be possible between NAF components, which need to re-configure the network once a disaster partitions the network into disconnected partitions. Through these parallel communication channels, a gossip-based communication protocol is employed to spread updates to the neighbouring nodes, leading to the rapid dissemination of data throughout the network.

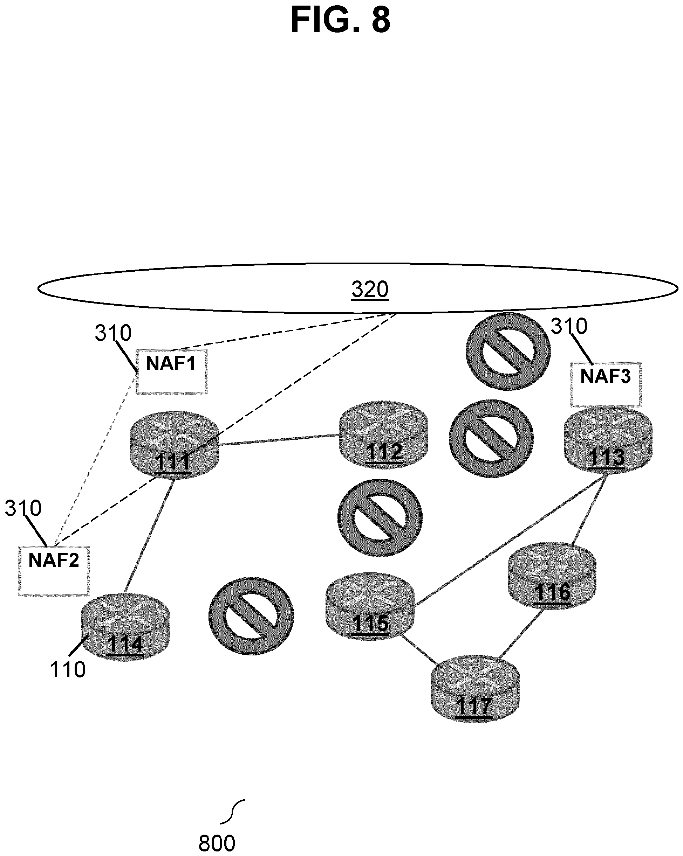

**FIG. 8** depicts another example network 800 for Infrastructure Control and Management C&M hit by a disaster. In this case, communication links between nodes 112-113, nodes 112-115, nodes 114-115 and from NAF3 to other NAFs is rendered unavailable. This results in a network partitioning into *k* = 2 independent partitions, in the sense that no traffic can be exchanged between the nodes of the partitions. Due to the automatic execution of the disaster tolerant method 600 of network control and management performed iteratively by the NAF components, partition 1 (nodes 111, 112 and 114) continue operating as per usual, whereas partition 2 (nodes 113, 115, 116 and 117) continues operating under the control and management of NAF3. Hence, all nodes are served as none completely loose connectivity. Since not all nodes are rendered unmanageable by the disaster, and service provision is not fully interrupted, valuable and valid resources of partition 2 are not wasted as operational nodes can still be exploited (whereas otherwise they would have been unusable).

Thus, the NAF enabled network is disaster-tolerant. To achieve this, the NAF enabled technology addresses four main problems:
(i) the partial data replication and smart distribution of NAF components among the available network locations,
(ii) the definition of the architectural deployment per network node to achieve the NAF solution,
(iii) the negotiation protocols between the reachable NAF components to maintain subsets of the NAF operational, and
(iv) the self-reconciliation and re-optimization of the NAF components in the event of a disaster and/or a disaster recovery.

Hence, different aspects of the invention present a modular network component, which enables a highly scalable solution. All network components together form a control and management plane which can intervene if necessary in determining what to do or how to resolve an incoming request, or up-scale or down-scale the number of nodes being managed or maintaining communication with disconnected sub-groups of nodes, thereby minimizing the detrimental effects of network breakdowns, rendering a truly scalable as well as disaster tolerant network control and management network and method.

Furthermore, it is to be understood that the embodiments, realizations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

The various means may comprise software modules residing in RAM memory, flash memory, ROM memory, EPROM memory, EEPROM memory, registers, hard disk, a removable disk, a CD-ROM, or any other form of storage medium known in the art.

The various means may comprise logical blocks, modules, and circuits may be implemented or performed with a general purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The various means may comprise computer-readable media including, but not limited to, magnetic storage devices (for example, hard disk, floppy disk, magnetic strips, etc.), optical disks (for example, compact disk (CD), digital versatile disk (DVD), etc.), smart cards, and flash memory devices (for example, EPROM, card, stick, key drive, etc.). Additionally, various storage media described herein can represent one or more devices and/or other machine-readable media for storing information. The term machine-readable medium can include, without being limited to, various media capable of storing, containing, and/or carrying instruction(s) and/or data. Additionally, a computer program product may include a computer readable medium having one or more instructions or codes operable to cause a computer to perform the functions described herein.

What has been described above includes examples of one or more embodiments. It is, of course, not possible to describe every conceivable combination, or permutation, of components and/or methodologies for purposes of describing the aforementioned embodiments. However, one of ordinary skill in the art will recognize that many further combinations and permutations of various embodiments are possible within the general inventive concept derivable from a direct and objective reading of the present disclosure. Accordingly, it is intended to embrace all such alterations, modifications and variations that fall within scope of the appended claims.

In the following, further examples of the invention are provided: A network component, in a node of a network comprising a plurality of nodes, for network control and management, the network component comprising: memory means configured for maintaining a copy of the data used by the network component to operate and which is exchanged with other network components; a data bus configured for internal communications within the network component and external communications with other network components; means of servicing configured for operating the various means within the network component and configured for establishing and managing services provisioning; means of path computation configured for determining the service provision path; and means of synchronization configured for communicating and exchanging data with other network components comprising: broadcasting reachability metrics to other network components in the network and receiving reachability metrics from other network components in the network; computing a local domain table based on the received reachability metrics, the local domain table identifying all network components available per node, and establishing one of the network components as the primary network component for each node; and executing service provisioning, by the means of servicing, if established as the primary network component.

The network component, wherein for a software implementation, it comprises at least one memory configured for storing programmable instructions and at least one processor configured for executing the programmable instructions, wherein the programmable instructions comprise the plurality of means. The network component, wherein the means of servicing is further configured for: managing the connectivity services; or requesting from the means of path computation the corresponding path for the new service; or managing the connection requests to the south bound interface means configured for establishing the computed path through the corresponding nodes according to the requested configurations; or storing and retrieving from the memory means the relevant information for the service provisioning. The network component, wherein the synchronization module is further configured for: monitoring the most efficient communication channels between network components of a same node; or timely exchanging the partial replicas of information; or detecting under-replicated data blocks and ensuring they are replicated on appropriate and relevant different nodes; or negotiating network components operations across nodes, such as path computations, requesting partial computations and combining retrieved results; or dealing with self-reconciliation and/or re-optimization activities between network components in the event of a disaster recovery, a new link installation, for instance, redirecting traffic through a recently installed or recovered traffic engineering link or an entire new network location. The network component, wherein the means of synchronization is further configured for establishing one of the network components as the primary network component for each node as a function of one or a combination of a plurality of whether the reachability metrics minimize latency, and/or maximise throughput, and/or minimize bandwidth usage, and/or minimize delay, and/or minimize costs, and/or otherwise optimize administrative metrics, and/or other metrics. The network component, wherein the means of synchronization is further configured for, in case of disaster-originated partition into a plurality of k disconnected partitions, continuing managing co-localized nodes and serve new requests within the same network partition. The network component, wherein the means of synchronization is further configured for determining that the primary network component for that node is non-operational and re-assigning the next network component in its local domain table as the new primary NAF component.

A method, in a network component, for control and management of a network comprising a plurality of nodes, the method comprising iteratively executing the steps of: broadcasting reachability metrics to other network components in the network and receiving reachability metrics from other network components in the network; computing a local domain table based on the received reachability metrics, the local domain table identifying all network components available per node, and establishing one of the network components as the primary network component for each node; and executing service provisioning if established as the primary network component.

The method, comprising computing, or otherwise obtaining, reachability metrics per node in the network; or broadcasting topological information to other network components in the network and receiving topological information from other network components in the network. The method, comprising establishing a connectivity configuration through service-oriented architecture mechanisms prior to executing the service provisioning, comprising computing the path between origin node and destination node and identifying, using the local domain table, the primary NAF components for managing each node in the path and the service provision between them. The method, comprising the means of servicing: managing the connectivity services; or requesting from the means of path computation the corresponding path for the new service; or managing the connection requests to the south bound interface means configured for establishing the computed path through the corresponding nodes according to the requested configurations; or storing and retrieving from the memory means the relevant information for the service provisioning. The method, comprising the means of synchronization: monitoring the most efficient communication channels between network components of a same node; or timely exchanging the partial replicas of information; or detecting under-replicated data blocks and ensuring they are replicated on appropriate and relevant different nodes; or negotiating network components operations across nodes, such as path computations, requesting partial computations and combining retrieved results; or dealing with self-reconciliation and/or re-optimization activities between network components in the event of a disaster recovery, a new link installation, for instance, redirecting traffic through a recently installed or recovered traffic engineering link or an entire new network location. The method, wherein one of the network components is established as the primary network component for each node as a function of one or a combination of a plurality of whether the reachability metrics minimize latency, and/or maximise throughput, and/or minimize bandwidth usage, and/or minimize delay, and/or minimize costs, and/or otherwise optimize administrative metrics, and/or other metrics. The method, further comprising, in case of disaster-originated partition into a plurality of k disconnected partitions, continuing managing co-localized nodes and serve new requests within the same network partition by the means of synchronization. The method, further comprising determining that the primary network component for that node is non-operational and re-assigning the next network component in its local domain table as the new primary NAF component by the means of synchronization.

A network for control and management comprising N nodes and M network components, wherein each network component is configured in a node of the plurality of nodes, wherein one network component is configured to control, or manage, n nodes, n being smaller than N, the network further comprising a communications plane configured for direct communications between network components allowing executing service provisioning by the nodes comprising the network component established as the primary network component.

The network, wherein the network components form a control management plane when in communication with each other. The network, further configured for determining one or more network breakdowns and/or outages and performing reconfiguration operations to maintain service continuity within the nodes of at least one subset of nodes. The network, wherein the means of synchronization is further configured for, in case of disaster-originated partition into a plurality of k disconnected partitions, continuing managing co-localized nodes and serve new requests within the same network partition. The network, wherein the total number M of network components assigned to control the N nodes, or the partial number m of network components assigned to control the n nodes, or, in case of disaster-originated partition into a plurality of k disconnected partitions, the number m of network components assigned to control the k nodes, is dynamically determined as a function of at least one factor such as the particular implementation scenario, geographic, administrative, topologic, equipment vendor configuration, number of nodes, expected quality of service, resiliency, history of operation and faults, or any other factor that might be implemented.

A method for network control and management in a network, the method comprising direct communications between network components and executing service provisioning by the nodes comprising the network component established as the primary network component.

The method, wherein the network components form a control management plane when in communication with each other. The method, further comprising determining one or more network breakdowns and/or outages and performing reconfiguration operations to maintain service continuity within the nodes of at least one subset of nodes. The method, in case of disaster-originated partition into a plurality of k disconnected partitions, continuing managing co-localized nodes and serve new requests within the same network partition. The method, wherein the total number M of network components assigned to control the N nodes, or the partial number m of network components assigned to control the n nodes, or, in case of disaster-originated partition into a plurality of k disconnected partitions, the number m of network components assigned to control the k nodes, is dynamically determined as a function of at least one factor such as the particular implementation scenario, geographic, administrative, topologic, equipment vendor configuration, number of nodes, expected quality of service, resiliency, history of operation and faults, or any other factor that might be implemented.

A computer program comprising instructions, once executed on a processor, for performing the method steps.

A computer-readable storage medium comprising instructions, once executed on a processor, for performing the method steps.

## Claims

1. A network component, in a node of a network comprising a plurality of nodes, for network control and management, the network component comprising:
memory means configured for maintaining a copy of the data used by the network component to operate and which is exchanged with other network components;
a data bus configured for internal communications within the network component and external communications with other network components;
means of servicing configured for operating the various means within the network component and configured for establishing and managing services provisioning;
means of path computation configured for determining the service provision path; and
means of synchronization configured for communicating and exchanging data with other network components comprising:
broadcasting reachability metrics to other network components in the network and receiving reachability metrics from other network components in the network;
computing a local domain table based on the received reachability metrics, the local domain table identifying all network components available per node, and establishing one of the network components as the primary network component for each node; and
executing service provisioning, by the means of servicing, if established as the primary network component.

2. The network component of claim 1, wherein the means of servicing is further configured for:
managing the connectivity services;
or requesting from the means of path computation the corresponding path for the new service;
or managing the connection requests to the south bound interface means configured for establishing the computed path through the corresponding nodes according to the requested configurations;
or storing and retrieving from the memory means the relevant information for the service provisioning.

3. The network component of claim 1, wherein the means of synchronization is further configured for:
monitoring the most efficient communication channels between network components of a same node;
or timely exchanging the partial replicas of information;
or detecting under-replicated data blocks and ensuring they are replicated on appropriate and relevant different nodes;
or negotiating network components operations across nodes, such as path computations, requesting partial computations and combining retrieved results;
or dealing with self-reconciliation and/or re-optimization activities between network components in the event of a disaster recovery, a new link installation, for instance, redirecting traffic through a recently installed or recovered traffic engineering link or an entire new network location.

4. The network component of claim 1, wherein the means of synchronization is further configured for establishing one of the network components as the primary network component for each node as a function of one or a combination of a plurality of whether the reachability metrics minimize latency, and/or maximise throughput, and/or minimize bandwidth usage, and/or minimize delay, and/or minimize costs, and/or otherwise optimize administrative metrics, and/or other metrics.

5. The network component of claim 1, wherein the means of synchronization is further configured for, in case of disaster-originated partition into a plurality of k disconnected partitions, determining that the primary network component for that node is non-operational and re-assigning the next network component in its local domain table as the new primary network component.

6. A method, in a network component of claim 1, for control and management of a network comprising a plurality of nodes, the method comprising iteratively executing the steps of:
broadcasting reachability metrics to other network components in the network and receiving reachability metrics from other network components in the network;
computing a local domain table based on the received reachability metrics, the local domain table identifying all network components available per node, and establishing one of the network components as the primary network component for each node; and
executing service provisioning if established as the primary network component.

7. The method of claim 6, comprising:
computing, or otherwise obtaining, reachability metrics per node in the network;
or broadcasting topological information to other network components in the network and receiving topological information from other network components in the network.

8. The method of claim 6, comprising establishing a connectivity configuration through service-oriented architecture mechanisms prior to executing the service provisioning, comprising computing the path between origin node and destination node and identifying, using the local domain table, the primary network components for managing each node in the path and the service provision between them.

9. The method of claim 6, comprising the means of servicing:
managing the connectivity services;
or requesting from the means of path computation the corresponding path for the new service;
or managing the connection requests to the south bound interface means configured for establishing the computed path through the corresponding nodes according to the requested configurations;
or storing and retrieving from the memory means the relevant information for the service provisioning.

10. The method of claim 6, comprising the means of synchronization:
monitoring the most efficient communication channels between network components of a same node;
or timely exchanging the partial replicas of information;
or detecting under-replicated data blocks and ensuring they are replicated on appropriate and relevant different nodes;
or negotiating network components operations across nodes, such as path computations, requesting partial computations and combining retrieved results;
or dealing with self-reconciliation and/or re-optimization activities between network components in the event of a disaster recovery, a new link installation, for instance, redirecting traffic through a recently installed or recovered traffic engineering link or an entire new network location.

11. The method of claim 6, wherein one of the network components is established as the primary network component for each node as a function of one or a combination of a plurality of whether the reachability metrics minimize latency, and/or maximise throughput, and/or minimize bandwidth usage, and/or minimize delay, and/or minimize costs, and/or otherwise optimize administrative metrics, and/or other metrics.

12. The method of claim 6, further comprising, in case of disaster-originated partition into a plurality of k disconnected partitions, determining that the primary network component for that node is non-operational and re-assigning the next network component in its local domain table as the new primary NAF component by the means of synchronization.

13. A network for control and management comprising N nodes and M network components according to claim 1, wherein each network component is configured in a node of the plurality of nodes, wherein one network component is configured to control, or manage, *n* nodes, *n* being smaller than N, the network further comprising a communications plane configured for direct communications between network components allowing executing service provisioning by the nodes comprising the network component established as the primary network component.

14. The network of claim 13, wherein the network components form a control management plane when in communication with each other.

15. The network of claim 14, further configured for determining one or more network breakdowns and/or outages and performing reconfiguration operations to maintain service continuity within the nodes of at least one subset of nodes.

16. The network of claim 13, wherein:
the total number M of network components assigned to control the N nodes,
or the partial number *m* of network components assigned to control the *n* nodes,
or, in case of disaster-originated partition into a plurality of *k* disconnected partitions, the number *m* of network components assigned to control the *k* nodes,
is dynamically determined as a function of at least one factor such as the particular implementation scenario, geographic, administrative, topologic, equipment vendor configuration, number of nodes, expected quality of service, resiliency, history of operation and faults, or any other factor that might be implemented.

17. A method for network control and management in a network according to claim 13, the method comprising direct communications between network components and executing service provisioning by the nodes comprising the network component established as the primary network component.

18. A computer program comprising instructions, once executed on a processor, for performing the method steps of any one of claims 6 to 12 and 17.

19. A computer-readable storage medium comprising instructions, once executed on a processor, for performing the method steps of any one of claims 6 to 12 and 17.

## Amended claims

### Amended claims in accordance with Rule 137(2) EPC.

1. A network component (310; 400), in a node (110) of a network (300; 700; 800) comprising a plurality of nodes, the network component configured for managing more than one network node for network control and management, synchronization and automation, the network component comprising:
memory means (410) configured for maintaining a copy of the data used by the network component to operate and which is exchanged with other network components;
a data bus (470) configured for internal communications within the network component and external communications with other network components;
means (420) of servicing configured for operating the various means within the network component and configured for establishing and managing services provisioning;
means (430) of path computation configured for determining the service provision path; and
means (440) of synchronization configured for communicating and exchanging data with other network components comprising:
broadcasting (520) reachability metrics to other network components in the network and receiving (520) reachability metrics from other network components in the network;
computing (530) a local domain table identifying all network components available per node based on the received reachability metrics;
ordering, for each node, the available network components as a function of the reachability metrics;
establishing (540) the network component with the optimum reachability metrics as the primary network component for each node; and
executing service provisioning (550), by the means of servicing, if established as the primary network component.

2. The network component of claim 1, wherein the means (420) of servicing is further configured for:
managing connectivity services;
or requesting from the means of path computation a corresponding path for a new service;
or managing connection requests to the south bound interface means configured for establishing a computed path through the corresponding nodes according to requested configurations;
or storing and retrieving from the memory means relevant information for the service provisioning.

3. The network component of claim 1, wherein the means (440) of synchronization is further configured for:
monitoring the most efficient communication channels between network components of a same node;
or timely exchanging partial replicas of information;
or detecting under-replicated data blocks and ensuring they are replicated on appropriate and relevant different nodes;
or negotiating network components operations across nodes, such as path computations, requesting partial computations and combining retrieved results;
or dealing with self-reconciliation and/or re-optimization activities between network components in the event of a disaster recovery, or a new link installation, or redirecting traffic through a recently installed, or recovered, traffic engineering link, or an entire new network location.

4. The network component of claim 1, wherein the means (440) of synchronization is further configured for establishing the network component with the optimum reachability metrics as the primary network component for each node as a function of one or a combination of a plurality of whether the reachability metrics minimize latency, and/or maximise throughput, and/or minimize bandwidth usage, and/or minimize delay, and/or minimize costs, and/or otherwise optimize administrative metrics, and/or other metrics.

5. The network component of claim 1, wherein the means (440) of synchronization is further configured for, in case of disaster-originated partition into a plurality of k disconnected partitions, determining that the primary network component for that node is non-operational and re-assigning the next network component in its local domain table as the new primary network component.

6. A method (500), in a network component (310; 400) of claim 1 configured to manage more than one network node for control and management, synchronization and automation of a network (300; 700; 800) comprising a plurality of nodes (110), the method comprising iteratively executing the steps of:
broadcasting (520) reachability metrics to other network components in the network and receiving (520) reachability metrics from other network components in the network;
computing (530) a local domain table based on the received reachability metrics, the local domain table identifying all network components available per node;
ordering, for each node, the available network components as a function of the reachability metrics;
establishing (540) the network component with the optimum reachability metrics as the primary network component for each node; and
executing (550) service provisioning if established as the primary network component.

7. The method of claim 6, comprising:
computing (520), or otherwise obtaining, reachability metrics per node in the network;
or broadcasting (510) topological information to other network components in the network and receiving topological information from other network components in the network.

8. The method of claim 6, comprising establishing a connectivity configuration through service-oriented architecture mechanisms prior to executing the service provisioning, comprising computing the path between origin node and destination node and identifying, using the local domain table, the primary network components for managing each node in the path and the service provision between them.

9. The method of claim 6, comprising the means (420) of servicing:
managing connectivity services;
or requesting from the means of path computation a corresponding path for a new service;
or managing connection requests to the south bound interface means configured for establishing a computed path through the corresponding nodes according to requested configurations;
or storing and retrieving from the memory means relevant information for the service provisioning.

10. The method of claim 6, comprising the means (440) of synchronization:
monitoring the most efficient communication channels between network components of a same node;
or timely exchanging partial replicas of information;
or detecting under-replicated data blocks and ensuring they are replicated on appropriate and relevant different nodes;
or negotiating network components operations across nodes, such as path computations, requesting partial computations and combining retrieved results;
or dealing with self-reconciliation and/or re-optimization activities between network components in the event of a disaster recovery, or a new link installation, or redirecting traffic through a recently installed, or recovered, traffic engineering link, or an entire new network location.

11. The method of claim 6, wherein one of the network components is established as the primary network component for each node as a function of one or a combination of a plurality of whether the reachability metrics minimize latency, and/or maximise throughput, and/or minimize bandwidth usage, and/or minimize delay, and/or minimize costs, and/or otherwise optimize administrative metrics, and/or other metrics.

12. The method of claim 6, further comprising, in case of disaster-originated partition into a plurality of *k* disconnected partitions, determining that the primary network component for that node is non-operational and re-assigning the next network component in its local domain table as the new primary NAF component by the means of synchronization.

13. A network (300; 700; 800) comprising N nodes (110) and M network components (310; 400) according to claim 1 for control and management, synchronization and automation, wherein each network component is configured in a node of the plurality of nodes, wherein one network component is configured to control, or manage, *n* nodes, *n* being smaller than N, the network further comprising a communications plane (320) configured for direct communications between network components allowing executing service provisioning by the nodes comprising the network component established as the primary network component, each primary network component established as the network component with the optimum reachability metrics from a plurality of network components ordered in a local domain table, the reachability metrics received from other network components in the network.

14. The network of claim 13, wherein the network components form a control management plane when in communication with each other.

15. The network of claim 14, further configured for determining one or more network breakdowns and/or outages and performing reconfiguration operations to maintain service continuity within the nodes of at least one subset of nodes.

16. The network of claim 13, wherein:
the total number M of network components assigned to control the N nodes,
or the partial number *m* of network components assigned to control the *n* nodes,
or, in case of disaster-originated partition into a plurality of *k* disconnected partitions, the number *m* of network components assigned to control the *k* nodes,
is dynamically determined as a function of at least one factor such as the particular implementation scenario, geographic, administrative, topologic, equipment vendor configuration, number of nodes, expected quality of service, resiliency, history of operation and faults, or any other factor that might be implemented.

17. A method for network control and management, synchronization and automation of a network (300; 700; 800) according to claim 13, the method comprising direct communications between network components (310; 400), each network component configured to manage more than one network node (110), and executing service provisioning by the nodes comprising the network component established as the primary network component, each primary network component established as the network component with the optimum reachability metrics from a plurality of network components ordered in a local domain table, the reachability metrics received from other network components in the network.

18. A computer program comprising instructions, once executed on a processor, for performing the method steps of any one of claims 6 to 12 and 17.

19. A computer-readable storage medium comprising instructions, once executed on a processor, for performing the method steps of any one of claims 6 to 12 and 17.
